# EUROPÄISCHE PATENTSCHRIFT

(11) **EP 3 573 907 B1**
(45) Veröffentlichungstag und Bekanntmachung des Hinweises auf die Patenterteilung: **20.03.2024**
(21) Anmeldenummer: 18702235.5
(22) Anmeldetag: 26.01.2018
(51) Int. Cl.: B65G 15/34, B29D 29/06

(54) **VERFAHREN ZUR HERSTELLUNG UND/ODER WIEDERVERWERTUNG EINES FÖRDERBANDES SOWIE FÖRDERBAND**
METHOD FOR PRODUCING AND/OR RECYCLING A CONVEYOR BELT, AND CONVEYOR BELT
PROCÉDÉ POUR LA FABRICATION ET/OU LA RÉUTILISATION D'UNE COURROIE TRANSPORTEUSE AINSI QUE COURROIE TRANSPORTEUSE

(30) Priorität: 26.01.2017 DE 102017101562
(43) Veröffentlichungstag der Anmeldung: 04.12.2019
(73) Patentinhaber: Forbo Siegling GmbH, 30179 Hannover (DE)
(72) Erfinder: SCHULZ, Lennart, 33604 Bielefeld (DE); BUCH, Torsten, 30900 Wedemark (DE)
(74) Vertreter: Scheffler, Jörg
(86) Internationale Anmeldenummer: PCT/EP2018/051960
(87) Internationale Veröffentlichungsnummer: WO 2018/138262

(56) Entgegenhaltungen:
- WO-A1-97/18148
- DE-U1- 8 816 293
- GB-A- 2 082 116
- JP-A- H10 338 377
- JP-A- S57 154 545
- JP-U- S 486 448
- US-A- 5 925 581
- US-A1- 2008 289 745

## Beschreibung

Die Erfindung betrifft ein Verfahren zur Herstellung und/oder Wiederverwertung eines Förderbandes.

Zur Beförderung von Gütern unterschiedlichster Ausprägung, wie beispielsweise Schüttgut, Gepäck, Lebensmitteln oder auch Abfällen, werden in den genannten, unterschiedlichen Bereichen vielmals Transportbänder eingesetzt, wodurch je nach Einsatzfall verschiedenste Anforderungen an ein solches Transportband gesetzt werden.

Im Allgemeinen lässt sich jedoch davon ausgehen, dass bedingt durch die meist relativ langen Förderstrecken vor allem in Längsrichtung eine geringe Dehnbarkeit des Transportbandes in Verbindung mit einer geringen Biegesteifigkeit gegeben sein muss, um eine Längung des Transportbandes im Betrieb zu minimieren und gleichzeitig z. B. das Umlenken des Transportbandes um Führungs- und/oder Antriebstrommeln zu ermöglichen.

Um diesen Anforderungen gerecht zu werden, werden in der Regel textile Gewebe, Stahlseile oder auch beides in oder als zumindest eine Lage eines Transportbandes eingebracht, um die gewünschten mechanischen Eigenschaften, z. B. hinsichtlich Zugfestigkeit, Dehnbarkeit und Quersteifigkeit, zu erreichen. Diese Lage wird in der Regel Zugträger genannt und befindet sich meist zwischen zwei weiteren Lagen, der Tragseite sowie der Laufseite. Diese Transportbänder lassen sich somit auf Basis des eingebrachten Zuträgers in Stahlseiltransportbänder und Textiltransportbänder differenzieren.

Nachteilig bei der Einarbeitung von Geweben oder Stahlseilen in ein solch ausgeprägtes Transportband ist die fehlende oder sehr aufwendig zu realisierende Wiederverwertbarkeit. Weiterhin werden die Transportbänder im Anschluss an ihre Fertigung in Bahnen konfektioniert und an den Bahnenden zu einem Endlosband verbunden. In diesem Verbindungsbereich weisen diese Transportbänder in der Regel gegenüber dem restlichen Band verminderte mechanische Eigenschaften auf.

Die beschriebenen Stahlseil- und Textiltransportbänder sind die am weitesten verbreiteten Transportbandvarianten. Darüber hinaus sind unterschiedliche Ausführungsformen von Transportbändern entwickelt worden.

Die DE 1 055 898 B beispielsweise beschreibt ein Transportband, welches zumindest eine Schicht mit in ungeordneter Lage eingebrachten Fasern, insbesondere Textilfasern, welche kein Gewebe bilden, aufweist. Die Beimischung erfolgt hierbei, um die Schicht zähhart, d. h. mit einer erhöhten Shore-Härte, zu gestalten. Diese Schicht, welche nicht zwangs-, jedoch vorzugsweise durch die Beimischung der Fasern zähhart gestaltet wird, dient der Minimierung bzw. der Verteilung der im Bereich der Zugseile des eigentlichen Zugträgers, hier bevorzugt Stahlseile, auftretenden Druckspitzen bei der Umlenkung des Bandes um eine Trommel.

Eine solche Beimischung von losen Fasern ist auch aus einem anderen Bereich bekannt. Hierzu ist in der US 3,981,206 A ein Zahnriemen dargestellt, welcher eine ebensolche mit Einzelfasern angereicherte Schicht aufweist. Diese Schicht dient wiederum nicht als Zugträger an sich, sondern als Basisschicht. Die in diese Basisschicht eingebrachten Fasern sind dabei vorzugsweise quer zur Laufrichtung des Riemens ausgerichtet, um dadurch eine Erhöhung der Querstabilität zu erreichen.

Überdies zeigt die DE 10 2006 023 231 A1 Fasern für ein Elastomerprodukt, wobei in die Fasermatrix weitere kurze Fäden gerichtet eingebettet sind und mehrere der Fasern miteinander verdreht oder nicht miteinander verdreht einen Festigkeitsträger des Elastomerproduktes, beispielsweise der Karkasse eines Reifens, bilden. Die Orientierung der kurzen Fäden ist dabei in einer bevorzugten Ausführungsform in Faserlängsrichtung ausgeprägt.

Im Rahmen einer zunehmend geforderten Ökoeffektivität mit einer gesteigerten Nachhaltigkeit von Produktionsprozessen ist es in zunehmendem Maße erforderlich, auch auf die Wiederverwertung der für die Fertigung von Transportbändern verwendeten Rohstoffe zu achten.

In Bezug hierauf beschreibt unter anderem die DE 10 2006 028 563 A1 ein Verfahren zur Wiederverwertung von mit Stahlseilen verstärkten Gummi-Transportbändern, wobei ein solches Transportband eine Kältekammer bei Temperaturen von bis zu -120 °C durchläuft. Hierbei wird der Gummi des Transportbandes sprödbrüchig und kann mittels einer anschließenden mechanischen Belastung beim Durchlaufen zweier Umlenkrollen und einer zusätzlichen Ultraschallbehandlung von den Stahlseilen getrennt werden.

Die DE 10 2011 053 143 A1 hingegen beschreibt ein Verfahren zur Zerkleinerung solcher, mit Stahlseilen verstärkten Fördergurten, wobei der zunächst aufgewickelte Fördergurt mittels einer Tafelschere vorzerkleinert wird und die so produzierten Teilstücke des Förderbandes anschließend mittels zweier hintereinander durchlaufenen Schreddern auf eine Endstückgröße weiter zerkleinert werden.

Ein ähnlich gelagertes Vorgehen im Rahmen der Wiederverwertung von Alt-Stahlseil-Fördergurten ist in der DE 10 2010 017 479 A1 offenbart, wobei der Fördergurt ebenfalls zunächst mittels eines Schredders zerkleinert, jedoch anschließend einem Walkkratzer zugeführt wird, welcher den Gummi des Fördergurtes von den Stahlseilen trennt. Großstückige Stahlseilreste werden daraufhin mittels eines Siebvorganges von kleinstückigen Stahlseilresten sowie dem Gummi abgeschieden. Folgend durchlaufen die kleinstückigen Reste einen Magnetabscheider, wodurch Stahlseilreste vom Gummi getrennt werden. Die somit weitestgehend stahlfreien Gummireste werden schlussendlich zu einem Granulat weiterverarbeitet.

Neben den dargestellten Verfahren existiert zudem die Möglichkeit stahl-armierte Gummi-Förderbänder mittels eines Pyrolyseverfahrens voneinander zu trennen. Hierbei wird das Förderband unter Ausschluss von Sauerstoff über mehrere Stunden mit hohen Temperaturen von 200 °C bis 900 °C beaufschlagt. In dieser Zeit zersetzt sich Gummi in Ruße, Öle sowie weitere Bestandteile und bildet mehr oder weniger ein Pulver aus. Die Stahlarmierungen eines so verwerteten Gummi-Förderbandes können nach Abschluss des Prozesses einfach dem Pulver entnommen werden. Ein solches Verfahren erfordert jedoch einen sehr hohen technischen Aufwand und lässt sich zudem nur für Gummi-Förderbänder einsetzten, welche eine Stahlarmierung aufweisen, Förderbänder aus Kunststoffen mit beispielsweise einer Textilverstärkung können so nicht verwertet werden.

Durch die DE 10 2007 008 813 A1 ist zudem ein Transportband für z. B. Papier- oder Kartonmaschinen offenbart, welche eine lastaufnehmende Struktur aufweist, die aus einer oder mehreren Polymerschichten besteht. In eine oder auch mehrere der Polymerschichten sind Fasern und/oder Füllstoffe eingebettet, welche eine unterschiedliche Länge aufweisen können. Die Fasen bestehen dabei insbesondere aus Aramid, Glas oder auch Carbon, wohingegen die Polymerschichten aus Polyurethan, Polyamid oder auch HDPE bestehen.

Die US 4,708,610 A zeigt unter anderem Keilriemen, welcher sich in wenigstens einen Abschnitt unterscheiden lässt, wobei in den einen Abschnitt oder mehrere Abschnitte Fasern in einer oder unterschiedlicher Orientierung eingebracht sind. Der Keilriemen wird hierbei in einer zylindrischen Gussform erzeugt, wobei zur Orientierung der in das Grundmaterial des Keilriemens eingebrachten Fasern koaxial zu der Gussform und diese umschließend eine zylindrische Magnetvorrichtung angeordnet wird deren Polausrichtung einerseits parallel, andererseits senkrecht zur Längsachse orientiert ist und aufgrund der derart erzeugten Magnetfelder eine Ausrichtung der Fasern entlang der Feldlinien der Magnetvorrichtung erreicht werden soll. In vergleichbarer Weise ist ebenso die Orientierung der Fasern durch ein elektrisches Feld beschrieben.

Die JP S48 - 6448 U gibt zudem an, dass die in einem Förderband verwendeten Seile aus wiederverwerteten Fasern bestehen können.

Darüber hinaus wird durch die JP S57 - 154 545 A ein Verfahren gemäß dem Oberbegriff des Anspruchs 1 offenbart.

Vor dem dargestellten Hintergrund liegt der Erfindung die Aufgabe zugrunde, eine Möglichkeit zu schaffen, ein Verfahren der eingangs genannten Art derart auszugestalten, dass die Herstellung und/oder Wiederverwertung eines Förderbandes mit einem im Vergleich zum Stand der Technik geringerem Aufwand durchzuführen ist.

Diese Aufgabe wird erfindungsgemäß mit einem Verfahren gemäß den Merkmalen des Anspruches 1 gelöst.

Die weitere Ausgestaltung der Erfindung ist den Unteransprüchen zu entnehmen.

Erfindungsgemäß ist also ein Verfahren zur Herstellung und/oder Wiederverwertung eines Förderbandes vorgesehen, wobei dieses Förderband zumindest eine Bandlage aufweist und diese Bandlage oder eine der Bandlagen als ein Zugträger ausgeprägt ist. Der Zugträger besteht hierbei zumindest aus einem Matrixmaterial und in dieses Matrixmaterial eingebetteten Filamenten. Das Verfahren umfasst hierbei ein Bereitstellen eines Zugträgerausgangsmateriales durch ein Bereitstellen eines bereits Filamente oder Filamentgruppen enthaltenden Recyclates oder ein Zusammenführen eines bereits Filamente oder Filamentgruppen enthaltenden Recyclates mit Matrixmaterial und/oder Filamenten, eine Erzeugung eines extrudierfähigen Zustandes des Zugträgerausgangsmateriales unter mechanisch unterstützter Durchmengung des bereitgestellten Zugträgerausgangsmateriales und Temperatureinfluss auf das bereitgestellte Zugträgerausgangsmaterial und eine Extrusion des die zumindest eine Bandlage des Förderbandes bildenden Zugträgers aus dem Zugträgerausgangsmaterial oder die Extrusion des eine Bandlage des Förderbandes bildenden Zugträgers aus dem Zugträgerausgangsmaterial und das Verbinden des Zugträgers mit zumindest einer weiteren Bandlage zu dem Förderband.. Erfindungsgemäß kann das Förderband somit aus einer Bandlage bestehen, wobei der insofern durch diese Bandlage gebildete Zugträger eben nicht aus einer mit Stahlseilen oder Textilgeweben verstärkten Bandlage, sondern aus einer mit Filamenten verstärkten Bandlage besteht.

Die Herstellung bzw. Wiederverwertung des Förderbandes respektive des Zugträgers des Förderbandes kann grundsätzlich durch eine sich unterscheidende Bereitstellung des Zugträgerausgangsmateriales auf mehrere Weisen erfolgen. Erfindungsgemäß ist vorgesehen, dass ausschließlich ein bereitgestelltes Recyclat verwendet wird, welches bereits die entsprechend gewünschten Soll-Anteile an Filamenten und/oder Matrixmaterial als Ist-Anteile enthält. Zudem bietet die Beimischung von Matrixmaterial und/oder Filamenten zum Recyclat eine weitere erfindungsgemäße Möglichkeit, wodurch eine Anpassung an gewünschte Soll-Anteile im herzustellenden Zugträger respektive Förderband ermöglicht werden kann. Insbesondere in Bezug auf eine quasi erstmalige Herstellung eines per se auf eine Wiederverwertung ausgelegten Förderbandes kann diese durch Zugabe von Filamenten in das Matrixmaterial erfolgen. Eine aufwändige Trennung der Filamente aus dem jeweilig wiederzuverwertenden Förderband ist hierbei in allen Fällen nicht notwendig.

Unabhängig der nicht notwendigen Trennung ist es trotzdem denkbar, dass das Matrixmaterial dabei auch aus entfilamentiertem Recyclat besteht und/oder aus dem Zugträger des Förderbandes herausgetrennte Filamente erneut in das Zugträgerausgangsmaterial eingebracht werden.

Die im Anschluss an die Bereitstellung des Zugträgerausgangsmateriales vorgesehene mechanisch unterstützte Durchmengung des Zugträgerausgangsmateriales und der Temperatureinfluss auf dieses Zugträgerausgangsmaterial könnten über einen Compounder, auch Compoundiermaschine, erfolgen, also eine Mischvorrichtung, die gleichzeitig in Form eines Extruders vorliegt und in welche das Zugträgerausgangsmaterial bestehend aus Matrixmaterial und Filamenten getrennt oder bereits vermischt eingebracht werden kann. Über im Compounder angeordnete Durchmischer wie Förderschnecken kann hierbei bei getrenntem Einbringen des Matrixmaterials und der Filamente ein erstmaliges Durchmengen oder bei bereits zusammengeführtem Einbringen ein weiteres Durchmengen des Zugträgerausgangsmateriales erfolgen. Der Temperatureinfluss auf das Zugträgerausgangsmaterial kann in Form eines Erhitzens des Zugträgerausgangsmateriales vorliegen, wobei das Matrixmaterial über seine Glasübergangstemperatur oder seine Schmelztemperatur erhitzt wird, sodass das Matrixmaterial und somit ebenso das Zugträgerausgangsmaterial quasi in flüssiger, insbesondere zähflüssiger Form mit den sich weiterhin in festem Zustand befindlichen Filamenten vorliegt.

Neben einer Ausführungsform bestehend aus einer Bandlage, könnten insbesondere ebenso zwei Bandlagen oder auch drei Bandlagen vorgesehen sein, wobei im Falle von drei Bandlagen eine Bandlage als Zugträger, eine als Tragseite sowie eine Bandlage als Laufseite ausgeprägt sein kann.

Bei einer solchen Ausgestaltung des Förderbandes mit mehr als einer Bandlage könnte der Zugträger vor dem Verbinden mit der zumindest einen weiteren Bandlage auf ein variables Maß abgelängt werden und anschließend mit der entsprechend abgelängten zumindest einen Bandlage verbunden oder aber auch der Zugträger und die zumindest eine weitere Bandlage miteinander verbunden und anschließend auf eine variable Länge abgelängt werden. Durch Verbund der Bahnenden des abgelängten Förderbandes kann hierdurch ein Endlosförderband hergestellt werden.

Im Falle des Matrixmateriales ist es zudem möglich, dass dieses ein Elastomer, insbesondere ein thermoplastisches Elastomer ist. Im Speziellen könnte das Matrixmaterial als ein Kunststoff oder als ein Gummi vorliegen.

Es ist weiterhin denkbar, dass die Menge, d. h. die Masse oder das Volumen an zugeführtem Matrixmaterial lediglich so hoch ist, dass eine Filamentstruktur im extrudierten Zugträger, insbesondere durch das menschliche Auge noch zu erkennen ist, was bedeutet, dass beispielsweise das Verhältnis der Volumina von Matrixmaterial zu Filamenten kleiner zwei zu eins, gar eins zu eins oder eins zu zwei betragen kann. Das Matrixmaterial würde somit die Filamente lediglich in Form eines Mantels dünn umschließen.

Das Recyclat an sich kann grundsätzlich als ein beliebiges, wiederzuverwertendes thermoplastisch formbares Material angesehen werden, welches Filamente enthält. Bevorzugt wird dieses Material aus wiederzuverwertenden, abgenutzten Förderbändern gebildet.

Die in den Zugträger des Förderbandes eingebrachten Filamente könnten sich zudem je nach Anforderung an die mechanischen Eigenschaften des Zugträgers, respektive des Förderbandes, in ihrer Länge, Durchmesser und/oder Materialbeschaffenheit unterscheiden. Denkbar ist dabei, dass neben der Verwendung einer einzelnen Sorte von Filamenten mehrere, zumindest zwei, sich unterscheidende Filamentsorten in das Zugträgerausgangsmaterial beigemischt werden.

Als in den Zugträger des Förderbandes eingebrachte Filamente könnten beispielsweise Metall-, Glas- oder auch Polymerfasern aus Polypropylen, Polyurethan, Polyethylen oder anderen Kunststoffen sowie Textil-, Aramid-, Keramik- oder Naturfasern aus beispielsweise Holz oder Baumwolle als auch Fasern aus glasfaser- und/oder kohlefaserverstärkten Kunststoffen in Betracht gezogen werden.

Die Länge der Filamente könnte dabei in einem Bereich von 0,1 Millimeter bis 50 Millimeter, der Durchmesser in einem Bereich von 0,1 Millimeter bis 3 Millimeter liegen.

In einer besonders vorteilhaften Weiterbildung des Verfahrens werden in Abhängigkeit eines Ist-Anteiles an Filamenten im Recyclat dem Zugträgerausgangsmaterial bis zum Erreichen eines Soll-Anteiles an Filamenten und/oder eines Soll-Anteiles an Matrixmaterial Filamente und/oder Matrixmaterial zugeführt. Mittels dieser Vorgehensweise kann auf einfache Art und Weise sichergestellt werden, dass der herzustellende Zugträger des Förderbandes unabhängig von dem verwendeten Recyclat für das Förderband vorgesehene und von den Ist-Anteilen an Filamenten im Recyclat abhängige Soll-Eigenschaften aufweist.

Die Ist-Anteile sowie die Soll-Anteile können hierbei in Gewichts- oder Volumen- oder Masseprozent bestimmt sein.

Erfindungsgemäß wird vorgesehen, dass das Recyclat durch eine Zerkleinerung des Förderbandes erzeugt wird. Durch die Zerkleinerung des Förderbandes und die damit verbundene Herstellung des Recyclates aus dem Förderband ist es im Bereich des Möglichen, dass die Wiederverwertung des Förderbandes durch die unkompliziertere Handhabung und Verarbeitung der zerkleinerten Förderbandstücke vereinfacht wird. Das Förderband muss also nicht als Ganzes verarbeitet werden.

Eine Zerkleinerung des Förderbandes könnte beispielsweise unter Verwendung von Schneidwerkzeugen und/oder zumindest eines Schredders durchgeführt werden.

In einer zudem vorteilhaften Ausführungsform wird das Recyclat durch eine Zerkleinerung eines eine Einlage in Form eines Gewebes, Gewirkes und/oder Gestrickes enthaltenden Förderbandes erzeugt. Die Einlage würde aufgrund der Zerkleinerung des Förderbandes in Filamentgruppen aufgeteilt werden, wobei diese gegebenenfalls durch die mechanisch unterstützte Durchmengung sowie den Temperatureinfluss auf das Zugträgerausgangsmaterial weiter in Filamente entflechtet werden könnten.

In einer zudem praxisgerechten Ausführungsform des Verfahrens ist der Ist-Anteil an Filamenten im Recyclat höher, als der Soll-Anteil an Filamenten im Zugträger des Förderbandes. Somit müsste vorteilhaft dem Recyclat lediglich Matrixmaterial zugeführt werden, wodurch auch nicht von vornherein auf eine Wiederverwertung ausgerichtete Förderbänder der Wiederverwertung zugeführt werden könnten.

Liegen die Filamente im Zugträger des Förderbandes in einem ungerichteten Zustand innerhalb des Ursprungsmateriales vor, so könnte unter anderem erreicht werden, dass bei der Verbindung des Förderbandes zu einem Endlosförderband im Bereich der Verbundstelle keine Änderung der Förderbandeigenschaften, welche über das gesamte Förderband quasi isotrop ausgebildet wären, hervorgerufen wird. Die mechanischen Eigenschaften des Förderbandes in der Verbundstelle würden somit vollständig oder nahezu den mechanischen Eigenschaften in nicht unterbrochenen Bereichen des Förderbandes entsprechen. Eine Unterbrechung des Zugträgers, wie im Falle eines mit Textilgeweben oder Stahlseilen verstärkten Förderbandes, und die beispielsweise damit einhergehende Minderung der Zugfestigkeit liegen nicht oder nur in sehr geringem Maße vor.

Die Verbindung der Bahnenden zu einem Endlosförderband könnte hierbei unter Ausgestaltung der jeweiligen Bahnenden mit einem Dreiecksprofil, Zahn- oder auch Sägezahnprofil in Längsrichtung erfolgen, wodurch eine höhere Anbindungslänge als bei reinen Stoßverbindungen erreicht werden kann. Solche Stoßverbindungen sind zudem ebenfalls möglich.

Liegen hingegen die Filamente im Zugträger des Förderbandes in einem gerichteten Zustand innerhalb des Matrixmateriales vor, dann könnten neben der Veränderung der Härte des Zugträgers auch weitere mechanische Eigenschaften des Förderbandes, wie die Zugfestigkeit oder Biegesteifigkeit des Förderbandes, gezielt z. B. über Länge, Durchmesser, Querschnitt, dem Längsprofil sowie den mechanischen Eigenschaften wie der Biegesteifigkeit der Filamente gesteuert werden.

Eine weiterhin vorteilhafte Ausführungsform des erfindungsgemäßen Verfahrens liegt darin begründet, dass der gerichtete Zustand der Filamente im Zugträger des Förderbandes durch eine Ausrichtung der Filamente bei der Extrusion des Zugträgers mittels zumindest eines mechanischen Ausrichtwerkzeuges erzeugt wird. Ein solches Vorgehen zur Ausrichtung der Filamente innerhalb des Zugträgers wäre als eine simple und kostengünstige Lösung mit geringem konstruktivem Aufwand umsetzbar.

Ein mechanisches Ausrichtwerkzeug zur Ausrichtung in einer ersten Raumrichtung, beispielsweise der Längsrichtung des Zugträgers oder Förderbandes, könnte dabei in einem definierten Abstand zueinander angeordnete Richtstäbe aufweisen, welche während des Extrusionsprozesses orthogonal zur Laufrichtung des Zugträgers in den Zugträger eingreifen und aufgrund einer mechanischen Einwirkung der Richtstäbe auf die im Zugträger vorhandenen Filamente eine Bewegung der Filamente in eine definierte Richtung hervorrufen. Es ist in diesem Zusammenhang beispielsweise denkbar, dass die Filamente mit ihrer Längsrichtung in Laufrichtung des Förderbandes ausgerichtet werden.

Ein solches mechanisches Ausrichtwerkzeug in Längsrichtung des Zugträgers oder Förderbandes kann dabei beispielsweise als ein Kamm, eine Bürste oder auch in Anlehnung an ein Fakirbrett ausgebildet sein.

Eine anders gelagerte Ausrichtmöglichkeit mittels eines mechanischen Ausrichtwerkzeuges in eine zweite Raumrichtung, beispielsweise die Querrichtung des Zugträgers oder Förderbandes, kann in der Ausgestaltung einer Breitschlitzdüse mit einer Flexlippe erfolgen. Diese Flexlippe würde dahingehend ausgestaltet und/oder positioniert, sodass mittels dieser eine Ausrichtung der Filamente ermöglicht wird. Die Breitschlitzdüse wiederum sollte sich am Austrittpunkt des Zugträgerausgangsmateriales aus beispielsweise einem Compounder oder Extruder befinden.

Bei der möglichen Formung des Zugträgerausgangsmateriales zum Zugträger mittels eines Kalanders, einer Walzenanordnung, ist denkbar, durch eine gezielte Einstellung der Walzenspalte sowie der Ausnutzung von durch unterschiedliche Rotationsgeschwindigkeiten der Walzen entstehenden Scherkräften die Ausrichtung der Filamente vorzunehmen.

Eine weitere mit Vorteil behaftete Möglichkeit der Ausrichtung der Filamente besteht darin, dass der gerichtete Zustand der Filamente im Zugträger des Förderbandes durch die Ausrichtung der Filamente bei der Extrusion des Zugträgers per Anlegen eines äußeren elektrischen Feldes und/oder eines äußeren Magnetfeldes und/oder eines äußeren elektromagnetischen Feldes erzeugt wird. Somit wäre es möglich, die Filamente innerhalb des Zugträgers des Förderbandes ohne einen mechanischen Einfluss auf den Zugträger während dessen Extrusion durchzuführen. Ein direkter mechanischer Eingriff wie beispielsweise ein Eintauchen in das Zugträgerausgangsmaterial wäre nicht vonnöten.

Durch das Anlegen eines äußeren Magnetfeldes könnten z. B. in den Zugträger eingebrachte metallische Filamente aus einem ferromagnetischen Material ausgerichtet werden. Mittels eines angelegten elektrischen Feldes könnte es ermöglicht werden, nichtmagnetische Filamente, wie z. B. Filamente aus Kunststoffen oder Textilfasern, welche im Vorfeld der Verarbeitung mit einer elektrischen Ladung versehen wurden, inert bereits eine Ladung tragen oder auch polar ausgeprägt sind, innerhalb des Zugträgers auszurichten.

Wird der gerichtete Zustand der Filamente im Zugträger des Förderbandes durch die Ausrichtung der Filamente mittels eines Reck- und/oder Walzprozesses des extrudierten Zugträgers und/oder des Förderbandes erzeugt, so ist dies als eine viel versprechende Variante der Ausrichtung der Filamente im Zugträger anzusehen. Der die Filamente beinhaltende Zugträger müsste dabei mit einer über einer Soll-Dicke liegenden Dicke hergestellt werden, wobei dieser anschließend mittels des Reck- bzw. Walzprozesses auf die Soll-Dicke reduziert wird. Aufgrund des Reck- bzw. Walzprozesses könnten die Filamente simultan zur Dickenreduktion im Wesentlichen in Laufrichtung ausgerichtet werden.

In einer weiteren besonders vorteilhaften Ausführungsform des Verfahrens werden durch eine festlegbare Ausrichtung und/oder die Länge und/oder den Durchmesser und/oder das Material und/oder den Ist-Anteil der Filamente im Zugträger des Förderbandes die mechanischen Eigenschaften des Förderbandes gezielt beeinflusst.

Der Ist-Anteil der Filamente im Zugträger kann hierbei einen Einfluss auf die Härte, den Walk- und Laufwiderstand, die Verschleißbeständigkeit, die Zugfestigkeit sowie die Biegesteifigkeit des Förderbandes haben.

In Abhängigkeit des Ist-Anteiles der Filamente im Zugträger können sich der Durchmesser sowie die Länge dieser Filamente insbesondere sowohl auf die Härte, die Zugfestigkeit wie auch auf die Biegesteifigkeit des Zugträgers auswirken. Neben diesen Filamenteigenschaften kann zudem eine Auswirkung einer Filamentgrößenverteilung, d. h. ein jeweiliger Anteil an sich in Länge und/oder Durchmesser und/oder der Querschnittsform unterscheidenden Filamenten am Ist-Anteil an Filamenten im Zugträger auf die mechanischen Eigenschaften wie Härte, Zugfestigkeit und/oder Biegesteifigkeit des Zugträgers gegeben sein. Ferner sind Filamente denkbar, die in ihre Längsrichtung eine Wellen- oder Schraubenform aufweisen. Überdies können auch Auswirkungen der mechanischen Eigenschaften der Filamente selbst, wie beispielsweise die Biegesteifigkeit dieser, auf die mechanischen Eigenschaften des Zugträgers gegeben sein.

In Bezug auf die Ausrichtung der Filamente ist es möglich, dass eine Ausrichtung in Laufrichtung des Förderbandes die Zugfestigkeit des Förderbandes steigert, eine Ausrichtung orthogonal zur Laufrichtung die Quersteifigkeit oder eine regellose Ausrichtung die Härte des Förderbandes erhöht. Mittels einer Ausrichtung der Filamente unter einem bestimmten Winkel innerhalb des Zugträgers des Förderbandes könnte zudem eine Wanderungsbewegung zu einer Seite oder aber auch eine Selbstzentrierung des Förderbandes während dessen Betriebes quer zur Laufrichtung erreicht werden.

Eine überaus zweckmäßige Weiterbildung des Verfahrens ergibt sich weiter daraus, dass die Filamente durch Aufschmelzen des Förderbandes und Separieren der hierbei nicht aufgeschmolzenen Filamente aus der Schmelze vom Förderband getrennt werden. Auf Basis dieses Vorgehens würden Förderbandmaterial und Filamente getrennt voneinander vorliegen, wodurch z. B. das sich ergebende Förderbandmaterial als Matrixmaterial als auch die Filamente dem Herstellungsprozess des Förderbandes vorteilhaft erneut zugeführt werden könnten. Das Förderbandmaterial könnte hierbei gleich dem ursprünglichen Matrixmaterial sein, sich jedoch auch von diesem aufgrund einer Verwendung eines anderen Materiales für weitere Bandlagen von diesem unterscheiden.

Erfolgt das Separieren der nicht aufgeschmolzenen Filamente aus der Schmelze des Förderbandes durch das Eigengewicht der Filamente und/oder unter Anlegen eines äußeren Magnetfeldes oder eines elektrischen Feldes oder eines elektromagnetischen Feldes und/oder eines Siebvorganges, kann dies als weithin einträglich angesehen werden. Dementsprechend kann es folglich ermöglicht werden, die Filamente aus der Schmelze in Abhängigkeit der Art der in der Schmelze vorhandenen Filamente, beispielsweise gekennzeichnet durch deren Material, mit einer auf die Art der Filamente abgestimmten Methode zu separieren.

Eine Weiterbildung des erfindungsgemäßen Verfahrens stellt sich zudem als überaus nutzbringend dar, wenn das wiederverwertbare Förderband auf Teilstücke mit begrenzter Anzahl sich unterscheidender Teilstücklängen abgelängt wird, auf Basis derer durch Aneinanderreihung und Verbinden mehrerer ausgewählter Teilstücke mit gleichen und/oder sich unterscheidenden Teilstücklängen ein Endlosförderband variabler Länge erzeugt wird. Hierdurch kann das wiederverwertbare Förderband quasi in modularer Bauweise erzeugt werden. Durch die Herstellung von Teilstücken, welche im Wesentlichen normierte Teilstücklängen aufweisen, könnten Förderbänder aus diesen Teilstücken mit einer flexiblen Förderbandlänge auf einfache Art und Weise erzeugt werden. Die Teilstücke des zu erzeugenden Förderbandes könnten aneinandergelegt und unter Druck und Temperatur miteinander zu einem Endlosförderband verbunden werden. Aufgrund der im Wesentlichen gleichbleibenden mechanischen Eigenschaften im Verbundbereich der Teilstücke wäre dieses so erzeugte Endlosförderband mit einem einteilig hergestellten Endlosförderband vergleichbar.

Ein Förderband zur Durchführung des erfindungsgemäßen Verfahrens ist vorteilhaft ein Förderband, bei welchem das Matrixmaterial des Zugträgers und/oder die Bandlagenmaterialien des Förderbandes einen geringeren Schmelzpunkt aufweisen als die in den Zugträger eingebrachten Filamente.

Ein solches Förderband könnte beispielsweise aus einem Polymer mit in den Zugträger eingebrachten Polymerfilamenten bestehen. Das Polymer könnte unter anderem als Polyurethan ausgebildet sein, wobei das die Filamente bildende Polymer einen höheren Schmelzpunkt aufweist, als das das Matrixmaterial bzw. Förderbandmaterial bildende Polymer. Im Falle des Polyurethans würden die Filamente ferner eine höhere Härte aufweisen als beispielsweise das Matrixmaterial. Bei einem Aufschmelzen des Matrixmateriales könnten die Filamente infolgedessen aus diesem separiert werden.

Im Falle von im Zugträger des Förderbandes eingebrachten Metallfilamenten könnten die Metallfilamente zusätzlich zu dem Aufschmelzen des Förderbandes mittels einer Induktionserwärmung eine Übertemperatur erfahren, wodurch sich diese einfacher aus der Schmelze separieren lassen würden.

Die Erfindung lässt verschiedene Ausführungsformen zu. Zur weiteren Verdeutlichung ihres Grundprinzips ist eine davon in der Zeichnung dargestellt und wird nachfolgend beschrieben.

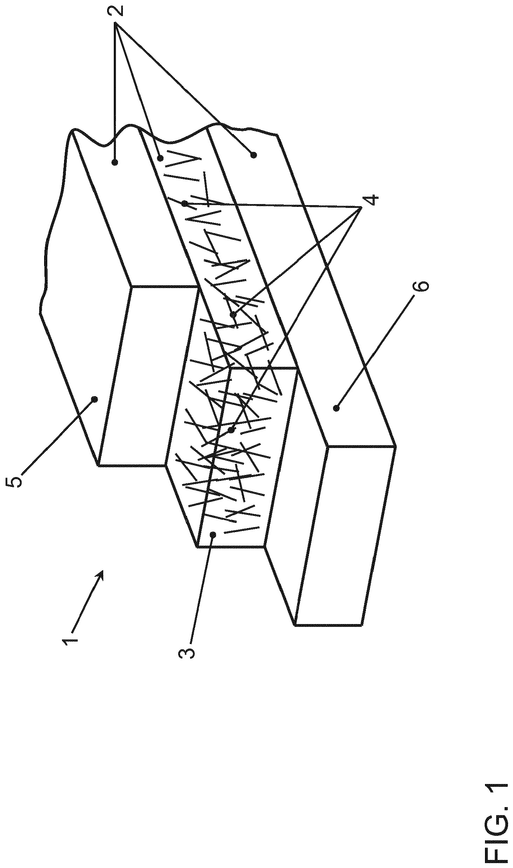

Diese zeigt in
- Fig. 1: eine Weiterbildung eines wiederverwertbaren Förderbandes.

Figur 1 zeigt eine schematische Darstellung einer Weiterbildung eines wiederverwertbaren Förderbandes 1, wobei dieses Förderband 1 drei miteinander stoffschlüssig verbundene Bandlagen 2 aufweist, von welchen eine Bandlage 2 als ein Zugträger 3 ausgeprägt ist. Die das Förderband 1 bildenden Bandlagen 2 sind aus dem gleichen Material, hier dem Matrixmaterial hergestellt und der Zugträger 3 weist in das Matrixmaterial eingebettete Filamente 4 auf, welche in einem ungerichteten Zustand innerhalb des Matrixmateriales vorliegen. Die weiteren Bandlagen 2 sind zudem als eine nicht mit Filamenten 4 versehene Tragseite 5 sowie Laufseite 6 ausgeprägt.

### BEZUGSZEICHENLISTE

- 1: Förderband
- 2: Bandlage
- 3: Zugträger
- 4: Filament
- 5: Tragseite
- 6: Laufseite

## Patentansprüche

1. Verfahren zur Herstellung und/oder Wiederverwertung eines Förderbandes (1), wobei dieses Förderband (1) zumindest eine Bandlage (2) aufweist, diese Bandlage (2) oder eine der Bandlagen (2) als ein Zugträger (3) ausgeprägt ist und dieser Zugträger (3) zumindest aus einem Matrixmaterial und in dieses Matrixmaterial eingebetteten Filamenten (4) besteht, wobei das Verfahren
- ein Bereitstellen eines Zugträgerausgangsmateriales durch
• ein Bereitstellen eines bereits Matrixmaterial und Filamente (4) oder Filamentgruppen enthaltenden Recyclates oder
• ein Zusammenführen eines bereits Matrixmaterial und Filamente (4) oder Filamentgruppen enthaltenden Recyclates mit Matrixmaterial und/oder Filamenten (4)
- eine Erzeugung eines extrudierfähigen Zustandes des Zugträgerausgangsmateriales unter mechanisch unterstützter Durchmengung des bereitgestellten Zugträgerausgangsmateriales und Temperatureinfluss auf das bereitgestellte Zugträgerausgangsmaterial
und
- eine Extrusion des die zumindest eine Bandlage (2) des Förderbandes (1) bildenden Zugträgers (3) aus dem Zugträgerausgangsmaterial
oder
- die Extrusion des eine Bandlage (2) des Förderbandes (1) bildenden Zugträgers (3) aus dem Zugträgerausgangsmaterial und das Verbinden des Zugträgers (3) mit zumindest einer weiteren Bandlage (2) zu dem Förderband (1)
umfasst,
**dadurch gekennzeichnet, dass** das Recyclat durch eine Zerkleinerung des Förderbandes (1) erzeugt wird.

2. Verfahren nach Anspruch 1, **dadurch gekennzeichnet, dass** in Abhängigkeit eines Ist-Anteiles an Filamenten (4) im Recyclat dem Zugträgerausgangsmaterial bis zum Erreichen eines Soll-Anteiles an Filamenten (4) und/oder eines Soll-Anteiles an Matrixmaterial Filamente (4) und/oder Matrixmaterial zugeführt werden.

3. Verfahren nach Anspruch 1 oder 2, **dadurch gekennzeichnet, dass** das Recyclat durch eine Zerkleinerung eines eine Einlage in Form eines Gewebes, Gewirkes und/oder Gestrickes enthaltenden, weiteren Förderbandes erzeugt wird.

4. Verfahren nach zumindest einem der vorhergehenden Ansprüche, **dadurch gekennzeichnet, dass** der Ist-Anteil an Filamenten (4) im Recyclat höher ist als der Soll-Anteil an Filamenten (4) im Zugträger (3) des Förderbandes (1).

5. Verfahren nach zumindest einem der vorhergehenden Ansprüche, **dadurch gekennzeichnet, dass** die Filamente (4) im Zugträger (3) des Förderbandes (1) in einem ungerichteten Zustand innerhalb des Matrixmateriales vorliegen.

6. Verfahren nach zumindest einem der vorhergehenden Ansprüche, **dadurch gekennzeichnet, dass** die Filamente (4) im Zugträger (3) des Förderbandes (1) in einem gerichteten Zustand innerhalb des Matrixmateriales vorliegen.

7. Verfahren nach zumindest einem der vorhergehenden Ansprüche, **dadurch gekennzeichnet, dass** der gerichtete Zustand der Filamente (4) im Zugträger (3) des Förderbandes (1) durch eine Ausrichtung der Filamente (4) bei der Extrusion des Zugträgers (3) mittels zumindest eines mechanischen Ausrichtwerkzeuges erzeugt wird.

8. Verfahren nach zumindest einem der vorhergehenden Ansprüche, **dadurch gekennzeichnet, dass** der gerichtete Zustand der Filamente (4) im Zugträger (3) des Förderbandes (1) durch eine Ausrichtung der Filamente (4) bei der Extrusion des Zugträgers (3) per Anlegen eines äußeren elektrischen Feldes und/oder eines äußeren Magnetfeldes und/oder eines äußeren elektromagnetischen Feldes erzeugt wird.

9. Verfahren nach zumindest einem der vorhergehenden Ansprüche, **dadurch gekennzeichnet, dass** der gerichtete Zustand der Filamente (4) im Zugträger (3) des Förderbandes (1) durch eine Ausrichtung der Filamente (4) mittels eines Reck- und/oder Walzprozesses des extrudierten Zugträgers (3) und/oder des Förderbandes (1) erzeugt wird.

10. Verfahren nach zumindest einem der vorhergehenden Ansprüche, **dadurch gekennzeichnet, dass** durch eine festlegbare Ausrichtung und/oder die Länge und/oder den Durchmesser und/oder das Material und/oder den Ist-Anteil der Filamente (4) im Zugträger (3) des Förderbandes (1) die mechanischen Eigenschaften des Förderbandes (1) gezielt beeinflusst werden.

11. Verfahren nach zumindest einem der vorhergehenden Ansprüche, **dadurch gekennzeichnet, dass** die Filamente (4) durch Aufschmelzen des Förderbandes (1) und Separieren der hierbei nicht aufgeschmolzenen Filamente (4) aus der Schmelze vom Förderband (1) getrennt werden.

12. Verfahren nach zumindest einem der vorhergehenden Ansprüche, **dadurch gekennzeichnet, dass** das Separieren der nicht aufgeschmolzenen Filamente (4) aus der Schmelze des Förderbandes (1) durch das Eigengewicht der Filamente (4) und/oder unter Anlegen eines äußeren Magnetfeldes oder eines elektrischen Feldes oder eines elektromagnetischen Feldes und/oder eines Siebvorganges erfolgt.

13. Verfahren nach zumindest einem der vorhergehenden Ansprüche, **dadurch gekennzeichnet, dass** das wiederverwertbare Förderband (1) auf Teilstücke mit begrenzter Anzahl sich unterscheidender Teilstücklängen abgelängt wird, auf Basis derer durch Aneinanderreihung und Verbinden mehrerer ausgewählter Teilstücke mit gleichen und/oder sich unterscheidenden Teilstücklängen ein Endlosförderband variabler Länge erzeugt wird.

## Claims

1. Method for producing and/or recycling a conveyor belt (1), wherein this conveyor belt (1) has at least one belt layer (2), this belt layer (2) or one of the belt layers (2) is embodied as a tension-bearing member (3) and this tension-bearing member (3) consists of at least a matrix material and filaments (4) embedded in this matrix material, wherein the method comprises
- providing a tension-bearing member starting material by
• providing a recyclate already containing matrix material and filaments (4) or filament groups or
• combining a recyclate already containing matrix material and filaments (4) or filament groups with matrix material and/or filaments (4),
- producing an extrudable state of the tension-bearing member starting material with mechanically assisted mixing of the tension-bearing member starting material provided and the influence of temperature on the tension-bearing member starting material provided
and
- extruding the tension-bearing member (3) forming the at least one belt layer (2) of the conveyor belt (1) from the tension-bearing member starting material
or
- extruding the tension-bearing member (3) forming a belt layer (2) of the conveyor belt (1) from the tension-bearing member starting material and joining the tension-bearing member (3) to at least one further belt layer (2) to form the conveyor belt (1),
**characterized in that** the recyclate is produced by comminuting the conveyor belt (1).

2. Method according to Claim 1, **characterized in that** depending on a current proportion of filaments (4) in the recyclate, filaments (4) and/or matrix material are supplied to the tension-bearing member starting material until a desired proportion of filaments (4) and/or a desired proportion of matrix material is reached.

3. Method according to Claim 1 or 2, **characterized in that** the recyclate is produced by comminuting a further conveyor belt containing an inlay in the form of a woven, interlaced and/or knitted fabric.

4. Method according to at least one of the preceding claims, **characterized in that** the current proportion of filaments (4) in the recyclate is higher than the desired proportion of filaments (4) in the tension-bearing member (3) of the conveyor belt (1).

5. Method according to at least one of the preceding claims, **characterized in that** the filaments (4) in the tension-bearing member (3) of the conveyor belt (1) are present within the matrix material in a non-directed state.

6. Method according to at least one of the preceding claims, **characterized in that** the filaments (4) in the tension-bearing member (3) of the conveyor belt (1) are present within the matrix material in a directed state.

7. Method according to at least one of the preceding claims, **characterized in that** the directed state of the filaments (4) in the tension-bearing member (3) of the conveyor belt (1) is produced by aligning the filaments (4) by means of at least one mechanical alignment tool during the extrusion of the tension-bearing member (3).

8. Method according to at least one of the preceding claims, **characterized in that** the directed state of the filaments (4) in the tension-bearing member (3) of the conveyor belt (1) is produced by aligning the filaments (4) via the application of an external electric field and/or an external magnetic field and/or an external electromagnetic field during the extrusion of the tension-bearing member (3).

9. Method according to at least one of the preceding claims, **characterized in that** the directed state of the filaments (4) in the tension-bearing member (3) of the conveyor belt (1) is produced by aligning the filaments (4) by means of a stretching and/or rolling process of the extruded tension-bearing member (3) and/or of the conveyor belt (1).

10. Method according to at least one of the preceding claims, **characterized in that** the mechanical properties of the conveyor belt (1) are specifically influenced by means of a definable alignment and/or the length and/or the diameter and/or the material and/or the current proportion of the filaments (4) in the tension-bearing member (3) of the conveyor belt (1).

11. Method according to at least one of the preceding claims, **characterized in that** the filaments (4) are separated from the conveyor belt (1) by melting the conveyor belt (1) and separating the filaments (4) which are not melted hereby from the melt.

12. Method according to at least one of the preceding claims, **characterized in that** the separation of the filaments (4) that are not melted from the melt of the conveyor belt (1) is carried out by means of the inherent weight of the filaments (4) and/or by applying an external magnetic field or an electric field or an electromagnetic field and/or a screening operation.

13. Method according to at least one of the preceding claims, **characterized in that** the recyclable conveyor belt (1) is cut to length to form portions with a limited number of different portion lengths, on the basis of which, by lining up and connecting a plurality of selected portions with the same and/or different portion lengths, an endless conveyor belt of variable length is produced.

## Revendications

1. Procédé de fabrication et/ou de réutilisation d'une bande de transport (1), cette bande de transport (1) présentant au moins une couche de bande (2), cette couche de bande (2) ou l'une des couches de bande (2) se présentant sous la forme d'un support de traction (3) et ce support de traction (3) étant constitué au moins d'un matériau de matrice et de filaments (4) incorporés dans ce matériau de matrice, le procédé comprenant
- une fourniture d'un matériau de départ de support de traction par
- une fourniture d'un produit recyclé contenant déjà du matériau de matrice et des filaments (4) ou des groupes de filaments ou
- une combinaison d'un produit recyclé contenant déjà du matériau de matrice et des filaments (4) ou des groupes de filaments avec du matériau de matrice et/ou des filaments (4)
- une production d'un état prêt à l'extrusion du matériau de départ de support de traction par mélange mécaniquement assisté du matériau de départ de support de traction fourni et influence de la température sur le matériau de départ de support de traction fourni,
et
- une extrusion du support de traction (3) formant l'au moins une couche de bande (2) de la bande de transport (1) à partir du matériau de départ de support de traction,
ou
- l'extrusion du support de traction (3) formant une couche de bande (2) de la bande de transport (1) à partir du matériau de départ de support de traction et la liaison du support de traction (3) à au moins une autre couche de bande (2) pour former la bande de transport (1),
**caractérisé en ce que** le produit recyclé est produit par un broyage de la bande de transport (1).

2. Procédé selon la revendication 1, **caractérisé en ce qu'**en fonction d'une proportion réelle de filaments (4) dans le produit recyclé, des filaments (4) et/ou du matériau de matrice sont ajoutés au matériau de départ de support de traction jusqu'à atteindre une proportion de consigne de filaments (4) et/ou une proportion de consigne de matériau de matrice.

3. Procédé selon la revendication 1 ou 2, **caractérisé en ce que** le produit recyclé est produit par un broyage d'une autre bande de transport contenant un insert sous la forme d'un tissu, d'un tricot et/ou d'un article à mailles.

4. Procédé selon au moins l'une quelconque des revendications précédentes, **caractérisé en ce que** la proportion réelle de filaments (4) dans le produit recyclé est supérieure à la proportion de consigne de filaments (4) dans le support de traction (3) de la bande de transport (1).

5. Procédé selon au moins l'une quelconque des revendications précédentes, **caractérisé en ce que** les filaments (4) sont présents dans le support de traction (3) de la bande de transport (1) dans un état non orienté à l'intérieur du matériau de la matrice.

6. Procédé selon au moins l'une quelconque des revendications précédentes, **caractérisé en ce que** les filaments (4) sont présents dans le support de traction (3) de la bande de transport (1) dans un état orienté à l'intérieur du matériau de la matrice.

7. Procédé selon au moins l'une quelconque des revendications précédentes, **caractérisé en ce que** l'état orienté des filaments (4) dans le support de traction (3) de la bande de transport (1) est produit par une orientation des filaments (4) lors de l'extrusion du support de traction (3) au moyen d'au moins un outil d'orientation mécanique.

8. Procédé selon au moins l'une quelconque des revendications précédentes, **caractérisé en ce que** l'état orienté des filaments (4) dans le support de traction (3) de la bande de transport (1) est produit par une orientation des filaments (4) lors de l'extrusion du support de traction (3) par application d'un champ électrique extérieur et/ou d'un champ magnétique extérieur et/ou d'un champ électromagnétique extérieur.

9. Procédé selon au moins l'une quelconque des revendications précédentes, **caractérisé en ce que** l'état orienté des filaments (4) dans le support de traction (3) de la bande de transport (1) est produit par une orientation des filaments (4) au moyen d'un processus d'étirage et/ou de laminage du support de traction extrudé (3) et/ou de la bande de transport (1).

10. Procédé selon au moins l'une quelconque des revendications précédentes, **caractérisé en ce que** les propriétés mécaniques de la bande de transport (1) sont influencées de manière ciblée par une orientation définissable et/ou la longueur et/ou le diamètre et/ou le matériau et/ou la proportion réelle des filaments (4) dans le support de traction (3) de la bande de transport (1) .

11. Procédé selon au moins l'une quelconque des revendications précédentes, **caractérisé en ce que** les filaments (4) sont isolés de la bande de transport (1) par fusion de la bande de transport (1) et par séparation des filaments (4) non fondus de la masse fondue.

12. Procédé selon au moins l'une quelconque des revendications précédentes, **caractérisé en ce que** la séparation des filaments (4) non fondus de la masse fondue de la bande de transport (1) s'effectue par le poids propre des filaments (4) et/ou par application d'un champ magnétique extérieur ou d'un champ électrique ou d'un champ électromagnétique et/ou par une opération de tamisage.

13. Procédé selon au moins l'une quelconque des revendications précédentes, **caractérisé en ce que** la bande de transport réutilisable (1) est sectionnée en pièces partielles ayant un nombre limité de longueurs de pièce partielle différentes, sur la base desquelles une bande de transport sans fin de longueur variable est produite par juxtaposition et liaison de plusieurs pièces partielles sélectionnées ayant des longueurs de pièce partielle identiques et/ou différentes.
